Europäisches Patentamt

European Patent Office

Office européen des brevets

(19)

(11) Publication number: **0 061 730**
**A2**

# EUROPEAN PATENT APPLICATION

(12)

(21) Application number: **82102521.0**

(22) Date of filing: **25.03.82**

(51) Int. Cl.³: **H 02 M 7/537**

(30) Priority: **27.03.81 JP 45214/81**

(43) Date of publication of application:
**06.10.82 Bulletin 82/40**

(84) Designated Contracting States:
**DE FR GB NL**

(71) Applicant: **Toshiba Electric Equipment Corporation**
**1-43, 1-chome, Shibaura**
**Minato-ku Tokyo(JP)**

(72) Inventor: **Inui, Kenichi**
**Toshiba-Shinkoyasu-ryo, 2-14-10**
**Shinkoyasu Kanagawa-ku Yokohama-shi(JP)**

(72) Inventor: **Funabashi, Tadao**
**1-11-20, Sakae-cho**
**Atsugi-shi Kanagawa-ken(JP)**

(74) Representative: **Lehn, Werner, Dipl.-Ing. et al,**
**Hoffmann, Eitle & Partner Patentanwälte**
**Arabellastrasse 4 (Sternhaus)**
**D-8000 München 81(DE)**

(54) Transistor inverter device.

(57) A current mirror circuit (M) driven by the output of an
inverter unit and first and second constant current sources
are provided, and a first reference potential (V1) applied to
one input terminal of a comparator (OP3) is formed by a first
current (i1) flowing through a first output current path of the
current mirror circuit (M) at the time of the start of the
inverter unit. At this time, an output potential (V2) obtained
from a time constant circuit (46) according to a second
current (i2) flowing a second output current path of the
current mirror circuit (M) is compared in the comparator
(OP3), and a resistor for restricting the inverter unit transistor
base current is short-circuited by the output of the compara-
tor (OP3) when there occurs a relation V2 > V1. As a result, a
discharge lamp is held "on" by the output of the inverter
unit. Toward the end of the life time of the discharge lamp,
the output of an operational amplifier (OP1) goes to a high
level in response to an output from a detection winding, thus
turning on a transistor (Q2) to increase the current (i1) in the
first output current path of the current mirror circuit (M) so as
to increase the second current (i2). Thus, the output level (V3)
of the time constant circuit (46) is increased up to V3, and the
output of the inverter unit is intermittently stopped according
to the output of the comparator (OP2).

./...

# F I G. 2

- 1 -

Transistor inverter device

This invention relates to transistor inverter devices suited for use in discharge lamp operation.

U.S. Patent Application filed on December 28, 1981 based upon a Japanese Patent Application No. 186081/1980 discloses a discharge lamp operating device constructed with a transistor inverter device. In the disclosed transistor inverter device, a circuit for causing its intermittent operation when the discharge lamp is out of normal condition is provided. More particularly, when the circuit detects an abnormal voltage produced in an output transformer of the transistor inverter device toward the end of the life time of the discharge lamp, it causes the inverter to be operated intermittently for causing flickering of the discharge lamp so that the user can know that the lamp approaches to the end of the life time thereof.

U.S. Patent No. 4215292 discloses a different discharge lamp operating device. This operating device includes a base current control circuit provided between a base current drive circuit for transistors provided in a transistor inverter device and the bases of the transistors. Only during a prescribed starting period of a discharge lamp, the circuit restricts the base current through the transistors to restrict the inverter output voltage to a low value, thereby preventing the reduction of the life time of the discharge lamp due to flickering thereof.

It can be proposed to construct a discharge lamp operating device by combining the techniques disclosed in the U.S. Patent Application mentioned above and those disclosed in the U.S. Patent No. 4215292. In this case, a large number of component parts are involved since the circuit for causing the intermittent inverter operation and the base current control circuit individually include independent time constant circuits each consisting of a combination of an electrolytic condenser and a resistor. In addition, the electrolytic condenser occupies a comparatively large space. Moreover, it is difficult to design time constant circuits having different time constants with each other. Therefore, the overall system is inevitably large in size, leading to high cost, and inferior in reliability.

An object of the invention is to provide a transistor inverter device, which comprises a circuit for controlling the base current at the time of the start of a discharge lamp such as a fluorescent lamp and a circuit for causing its intermittent operation when an abnormal condition of the discharge lamp arises toward the end of the life time thereof, and in which the time constant circuit construction is simplified to reduce size and cost while also providing satisfactory reliability.

According to the invention, there is provided a transistor inverter device, in which a single time constant circuit common to a base current control circuit and a circuit for causing intermittent operation of inverter is provided, the base current control circuit restricts the transistor base current for a period until the output of the time constant circuit reaches a first reference potential after the closure of a power source switch, and the circuit for causing the intermittent operation of the inverter circuit causes a change in the amount of current supplied to the time constant circuit upon occurrence of an abnormal state of the output of the inverter circuit, thereby causing the inverter circuit to be intermittently stopped every time the output of the time constant circuit reaches a second reference potential.

This invention can be more fully understood from the following detailed description when taken in conjunction with the accompanying drawings, in which:

Fig. 1 is a circuit diagram showing one embodiment of the transistor inverter device according to the invention;

Fig. 2 is a circuit diagram showing the internal construction of an IC element used in the transistor inverter device shown in Fig. 1; and

Fig. 3 is a voltage waveform diagram for explaining the operation of the circuit shown in Figs. 1 and 2.

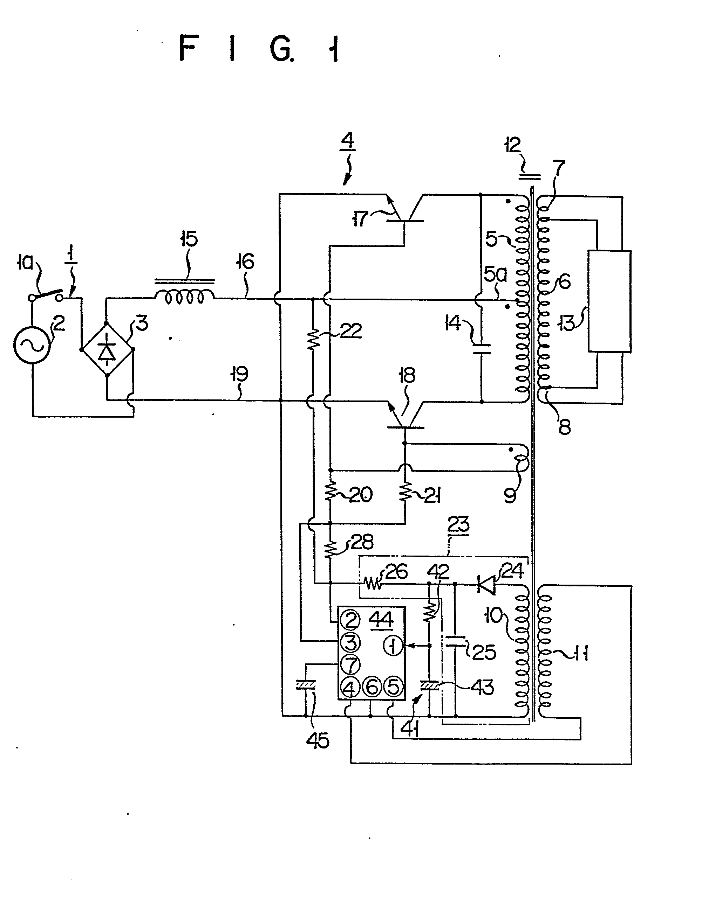

Now, an embodiment of the invention will be described in detail with reference to the drawings. Referring to Fig. 1, a power source section 1 includes, for instance, a 100-V 50-Hz commercial AC power source 2. The output of the power source 2 is supplied through a power source switch 1a to a full-wave rectifying circuit 3 to obtain a pulsating output. The output of the rectifying circuit 3 is supplied to an inverter 4. The inverter 4 includes an output transformer 12 having a primary winding 5, a secondary winding 6, discharge lamp electrode preheating windings 7 and 8, a feedback winding 9, a drive winding 10 and a detection winding 11. A discharge lamp 13 as a load is connected to the secondary winding 6 and preheating windings 7 and 8. A resonant capacitor 14 is connected across the primary winding 5. The primary winding 5 has a center tap 5a connected to a positive line 16 including a constant current inductance 15.

The opposite ends of the primary winding 5 are connected to the collectors of respective transistors 17 and 18. The emitters of the transistors 17 and 18 are connected to a negative line 19. The base of the transistor 17 is connected to one end of a resistor 20 and to one end of the feedback winding 9. The base of the transistor 18 is connected to one end of a resistor 21 and also to the other end of the winding 9. The center tap 5a of the primary winding 5 is connected through a resistor 22 to one end of a resistor 26 in a drive circuit 23. The other end of the resistor 26 is connected to the juncture between the cathode of a diode 24 and a capacitor 25. The anode of the diode 24 is connected to one end of the drive winding 10. The other end of the capacitor 25 is connected to the other end of the winding 10. The resistors 20 and 21 are commonly connected at the other end to one end of a resistor 28, and the other end thereof is connected to the juncture between the resistors 22 and 26.

Across the capacitor 25 is connected a power source circuit 41 which is a series circuit consisting of a resistor 42 and a capacitor 43. The juncture between the resistor 42 and the capacitor 43 is connected to a terminal pin (1) of an IC element 44, which has terminal pins (1) to (7). The terminal pin (2) is connected to the common juncture of the resistors 22, 26 and 28, and the terminal pin (3) is connected to the common juncture of the resistors 20, 21 and 28. The terminal pins (4) and (5) are connected to the respective opposite ends of the detection winding 11. The terminal pins (6) and (7) are respectively connected to the juncture between the drive winding 10 and capacitor 43 directly and through a capacitor 45.

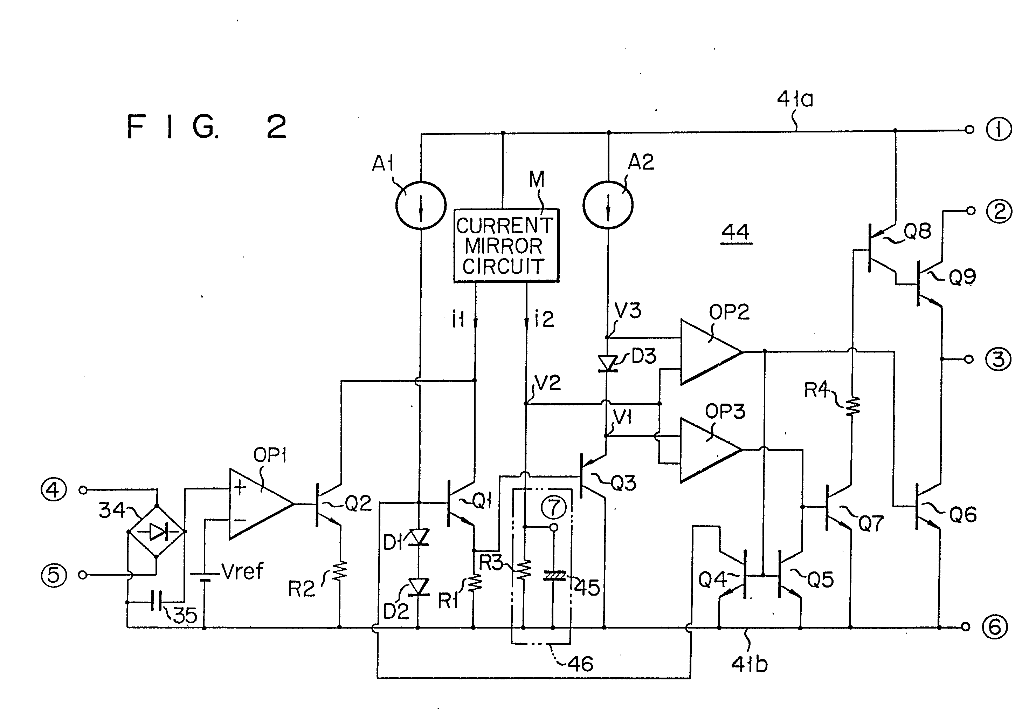

The terminal pins (1) and (6) are connected to the respective positive and negative output terminals of the power source circuit 41. The line connected to the terminal pin (1) in Fig. 2 is referred to as positive line 41a, and the line connected to the terminal pin (6) is referred to as negative line 41b. The positive line 41a is connected to the input terminal of a current mirror circuit M and also to the input terminal of each of first and second constant current sources A1 and A2. The current mirror circuit M provides current il from its first current output terminal. This first current output terminal is connected through the collector-emitter path of a transistor Q1 and a resistor R1 in series with one another to the negative line 41b, and is also connected through the collector-emitter path of a transistor Q2 and a resistor R2 in series with one another to the negative line 41b. The base of the transistor Q1 is connected to the current output terminal of the first constant current source A1 and is also connected through two series forward polarity diodes D1 and D2 to the negative line 41b.

The base of the transistor Q2 is connected to the output terminal of a comparator constituted by an operational amplifier OP1. A reference voltage from a reference voltage source Vref is supplied to a reference input terminal of the comparator OP1. The output of a rectifying circuit constituted by a full-wave rectifier 34 and a smoothing capacitor 35 is supplied to a comparison input terminal of the comparator OP1. The full-wave rectifier 34 has its AC input terminals connected through the terminal pins (4) and (5) to the detection winding 11 in Fig. 1.

The current mirror circuit M provides current i2 from its second current output terminal which is connected to one end of a resistor R3 and also to the terminal pin (7). A capacitor 45 which is an external element to the IC element 44 is connected to the terminal pin (7), and the other ends of the resistor R3 and capacitor 45 are connected to the negative line 41b. The parallel circuit of the resistor R3 and capacitor 45 constitutes a time constant circuit 46. The second current output terminal is further connected to one input terminal of each of first and second operational amplifiers OP2 and OP3 individually constituting respective comparators.

The current output terminal of the second constant current source A2 is connected to the other input terminal of the comparator OP2 and also to the anode of a diode D3. The cathode of the diode D3 is connected to the other input terminal of the comparator OP3 and also to the emitter of a transistor Q3. The transistor Q3 has its base connected to the emitter of the transistor Q1 and its collector connected directly to the negative line 41b.

The output terminal of the comparator OP2 is commonly connected to the bases of transistors Q4 and Q5 and also to the base of a transistor Q6. The emitters of the transistors Q4 and Q5 are directly connected to the negative line 41b, and the collector of the transistor Q4 is connected to the base of the transistor Q1. The collector of the transistor Q5 is connected to the output terminal of the comparator OP3 and also to the base of a transistor Q7. The transistor Q7 has its emitter connected to the negative line 41b and its collector connected through the resistor R4 to the base of a transistor Q8. The transistor Q8 has its emitter connected to the positive line 41a and its collector connected to the base of a transistor Q9. The transistor Q9 has its collector connected to the terminal pin (2), i.e., the output terminal of the drive circuit 23 in Fig. 1, and its emitter connected together with the collector of the transistor Q6 to the terminal pin (3). The emitter of the transistor Q6 is connected to the negative line 41b.

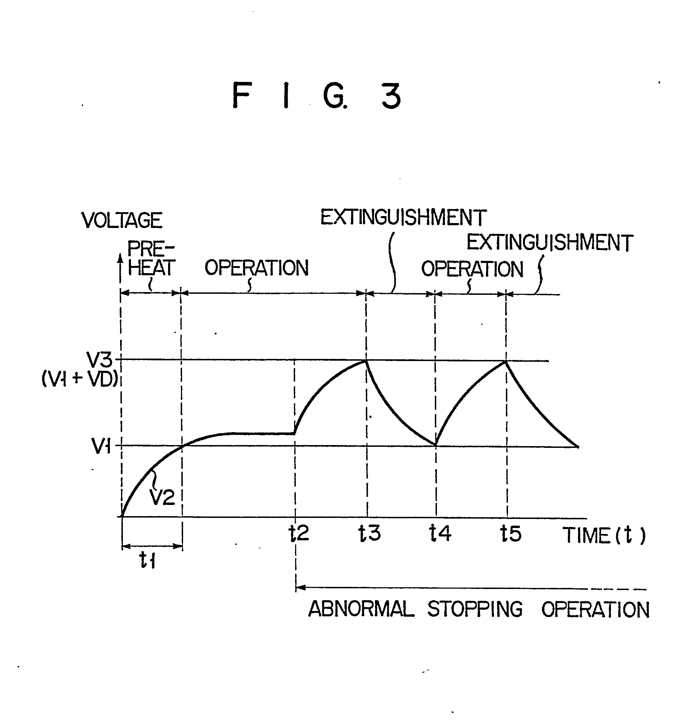

The operation of the embodiment of Figs. 1 and 2 will now be described with reference to Fig. 3. When the power source switch 1a is closed, the AC voltage of the AC power source 2 is rectified by the full-wave rectifier 3, and positive and negative DC voltages appear on the respective positive and negative lines 16 and 19.  In this state, one of the transistors 17 and 18 is supplied with base current through resistors 22, 28 and 20 or 21 and turned on, while the other transistor is turned off.  Subsequently, these transistors are alternately turned on and off by the action of the feedback winding.  Thus, a high frequency output of, for example, 20 kHz to 50 kHz is generated from the output transformer 12.  With this high frequency output a voltage is induced across the drive winding 10, and also a DC operating voltage from the power source circuit 41 is applied between the terminal pins (1) and (6) of the IC element 44.  During a prescribed lapse of time after the closure of the power switch 1a, the circuit between the terminal pins (2) and (3) in the IC element 44 is open as will be described.  Since the output of the drive circuit 23 is supplied through the resistor 28 of high resistance to the bases of the transistors 17 and 18, the base current in these transistors is low, so that the output of the inverter 4, and hence the output of the drive circuit 23, is low.

With the output of the drive circuit 23 supplied to the power source circuit 41 so that it appears between the terminal pins (1) and (6) in Fig. 2, the constant current sources A1 and A2 and current mirror circuit M are rendered operative.  As a result, the transistor Q1 is biased by the forward voltage across the diodes D1 and D2 and is thus turned on.  Meanwhile, since the output of the inverter 4 is low, the voltage applied between the terminals (4) and (5) is low so that the output of the comparator OP1 is at a low level.  Thus, the transistor Q2 is "off".

When the transistor Q1 is turned on, the current mirror circuit M provides the current i1.  As a result, the potential on the emitter of the transistor Q1 due to the resistor R1, which is substantially equal to $R1i1 = V1$, is supplied as a reference voltage Vref1 to one input terminal of the operational amplifier OP3.

Meanwhile, the current i2 flowing into the time constant circuit 46 which is constituted by the electrolytic condenser 45 and the parallel resistor R3, becomes equal to il due to the mirror effect. The potential V2 on the side of the terminal pin (7) of the time constant circuit 46 is commonly applied to the other input terminal of the operational amplifier OP3 and also to one input terminal of the operational amplifier OP2. If the resistance values of the resistors R1 and R3 are selected to be R1 < R3, the potential V2 of the time constant circuit 46 ultimately becomes higher than V1 although initially V1 > V2. When a situation of v1 $\fallingdotseq$ V2 occurs at the time of the transition from a state V1 > V2 to a state V1 < V2, the output of the operational amplifier OP3 is switched from a low to a high level to turn on the transistor Q7. As a result, the transistors Q8 and Q9 are progressively turned on. Thus, the path between the terminal pins (2) and (3) which has been open in an initial stage is short-circuited, and hence the high resistance resistor 28, is short-circuited. When this state occurs, the output of the drive circuit 23 is supplied to the transistors 17 and 18 without the agency of the resistor 28. When this state sets in, the inverter 4 is now normally oscillated to operate the discharge lamp 13. The period until the transistor Q9 is turned on after the closure of the power source switch 1a, i.e., the period t1 during which the base current is restricted by the base current control operation (Fig. 3) can be obtained from an equation

$$V1 = R3i2 \left(1 - e^{-\frac{t1}{C45R3}}\right) = V2 = R1i1 \qquad \ldots (1)$$

Assuming i1 $\fallingdotseq$ i2,

$$R3 = \left(1 - e^{-\frac{t1}{C45R3}}\right) = R1 \qquad \ldots (2)$$

Rearranging the equation 2,

$$1 - \frac{R1}{R3} = e^{-\frac{t1}{C45R3}} \qquad \qquad \dots (3)$$

Taking the logarithm of the equation 3,

$$\ln\left(\frac{R3 - R1}{R3}\right) = -\frac{t1}{C45R3} \qquad \qquad \dots (4)$$

Rearranging the equation (4), we have

$$t1 = C45R3 \ln\left(\frac{R3 - R1}{R3}\right)$$

If $R1 = 10$ k$\Omega$, $R3 = 15$ k$\Omega$ and $C45 = 100$ µF, we have $t1 = 1.64$ (sec.).

When an abnormal voltage is detected in the detection winding 11 due to one-sided magnetization of the core of the output transformer 12 toward the end of the life time of the discharge lamp 13, the detected voltage is applied between the terminal pins (4) and (5). As a result, the output of the comparator OP1 goes to a high level to turn on the transistor Q2, thus increasing the output current il from the current mirror circuit M. As a result, the current i2 is also increased to cause further increase of the potential V2 of the time constant circuit 46 as shown in Fig. 3. Meanwhile, the potential V3 on the aforementioned other input terminal of the operational amplifier OP2 is higher than the potential V1 at the aforementioned one input terminal of the operational amplifier OP3 by an amount corresponding to the terminal voltage $V_D$ across the diode D3, i.e., $V1 + V_D$. Thus, when the potential V2 of the time constant circuit 46 is further increased and becomes equal to the voltage V3, the output of the operational amplifier OP2 goes to a high level. As a result, the transistor Q6 is turned on to cause short-circuit between the terminal pins (3) and (6), thus interrupting the base currents of the transistors 17 and 18 to stop the oscillation of the inverter 4 and turn off the discharge lamp 13. At this time the output of the operational amplifier OP2 turns on the transistor Q5 to turn off the transistors Q7, Q8 and Q9, thus causing open-circuit between the terminal pins (2) and (3).

Further, with the change of the output of the operational amplifier OP2 to the high level, the transistor Q4 is turned on to turn off the transistor Q1. At the same time, with the stopping of the oscillation of the inverter 4 the abnormal state detection voltage vanishes to turn off the transistor Q2. When both the transistors Q1 and Q2 are turned off, the output current il of the current mirror circuit M becomes zero so that the current i2 also becomes zero. Thus, the electrolytic condenser 45 is discharged through the resistor R3. Meanwhile with the transistor Q1 turned off the terminal voltage across the resistor R1 also becomes zero to cause the voltage V3 at the aforementioned one input terminal of the operational amplifier OP2 to be reduced from V1 + $V_D$ to $V_D$ alone. Thus, the discharge lamp 13 is held "off" until the potential V2 of the time constant circuit 46 is reduced to $V_D$ with the discharge of the electrolytic condenser 13 (i.e., during the period from instant t3 till instant t4 in Fig. 3). When the potential V2 of the time constant circuit 46 becomes less than V3 (= $V_D$), the output of the operational amplifier OP2 goes to the low level. This means that the same state as the initial state when the abnormal voltage is detected sets in (and lasts for a period from instant t4 till instant t5). Subsequently, the above sequence of events is repeated. If the voltage $V_D$ is designed to have a value less than that of the voltage V1, the base current control operation will be carried out at the time point t4. Assuming that $V_D$ is equal to V1, such a base current control operation is not carried out. In this way, values of the voltages $V_D$, V1 to V3 may be selected voluntarily.

While the above embodiment has concerned with the discharge lamp 13 as the load of the inverter 4, the load is not limited to the discharge lamp, but the invention is of course applicable to any other device having similar load characteristics.

It is also possible to use any desired types of inverter devices. The time constant circuit may also be charged by a power source device without using the output of an inverter device. An abnormality detection means for detecting current variation due to the abnormality may also be used. The constructions of the base current control circuit can be modified, without departing from the spirit of the present invention.

As has been described in the foregoing, according to the invention a single time constant circuit can be used for determining the operation time of the circuit for restricting the transistor base current at the time of the start of the inverter and also determining the period of the intermittent operation of the inverter when an abnormal condition of the load is detected. Thus, it is possible to provide an inverter device, which is simple in construction and inexpensive and with which the reliability can be improved.

Claims:

1. A transistor inverter device characterized by a power source section (1), an inverter unit (4) energized by said power source section (1) to generate an AC output with a switching operation of transistor (17, 18), a drive circuit (23) for rectifying the output of said inverter unit (4) and supplying the rectified output to the base of said transistor (17, 18), a time constant circuit (46) furnished with power with the start of operation of said inverter unit (4), means for changing the output of the time constant circuit (46) in response to the operation state of the inverter unit (4), means for restricting the base current supplied to said transistor (17, 18) for a period until the output potential of said time constant circuit (46) reaches a first reference potential, and means for changing the output potential of the time constant circuit in response to an abnormal state of the output of the inverter unit (4) to intermittently stop the operation of said inverter·unit (4) every time the output potential of the time constant circuit reaches a second reference potential.

2. The transistor inverter device according to claim 1, characterized in that said means for restricting the transistor base current and said means for intermittently stopping the inverter operation are constituted by a single IC element (44).

3. The transistor inverter device according to claim 1, characterized in that said means for changing the output potential includes a current mirror circuit (M) driven by the output of said inverter unit (4), means (Q1, R1, Q3) for forming said first reference potential according to a first current (i1) flowing through a first output current path of said current mirror circuit (M) at the time of the start, means (11, 34, 35, OP1, Q2) for causing a second current (i2) to flow through said first output current path when said output is abnormal, means (Q3, D3) for forming said second reference potential according to said second current (i2), and means for supplying the output potential of said time constant circuit (46) to said comparator means (OP2, OP3) according to the current (i2) flowing through a second output current path of said current mirror circuit (M) at the time of the formation of said first and second reference potentials.

4. The transistor inverter device according to claim 3, characterized in that first and second constant current sources (Al, A2) are provided in parallel to the respective output current paths of said current mirror circuit (M) for causing the first and second currents (il, i2).

5. The transistor inverter device according to any one of claims 1 to 4, characterized in that said time constant circuit (46) is constituted by a resistor (R3) and a capacitor (45) connected in parallel with each other.

6. The transistor inverter device according to claim 5, characterized in that the time constant circuit (46) is charged by an output of the inverter unit (4).

# F I G. 1

F I G. 2

# F I G. 3